# FASCICULE DE BREVET EUROPEEN

(11) **EP 3 713 390 B1**
(45) Date de publication et mention de la délivrance du brevet: **30.08.2023**
(21) Numéro de dépôt: 18803432.6
(22) Date de dépôt: 20.11.2018
(51) Int. Cl.: A01D 34/66, A01D 75/18

(54) **MACHINE AGRICOLE AVEC UN SYSTÈME DE SÉCURITÉ À CINÉMATIQUE DE DÉCLENCHEMENT AMÉLIORÉE**
LANDWIRTSCHAFTLICHE MASCHINE MIT EINEM SICHERHEITSSYSTEM MIT VERBESSERTER AUSLÖSEKINEMATIK
AGRICULTURAL MACHINE COMPRISING A SAFETY SYSTEM WITH IMPROVED TRIGGERING KINEMATICS

(30) Priorité: 21.11.2017 FR 1761010
(43) Date de publication de la demande: 30.09.2020
(73) Titulaire: Kuhn SAS, 67700 Saverne (FR)
(72) Inventeur: BILLARD, Sylvain, 67440 Reinhardsmunster (FR)
(74) Mandataire: Cabinet Nuss
(86) Numéro de dépôt international: PCT/EP2018/081906
(87) Numéro de publication internationale: WO 2019/101731

(56) Documents cités:
- EP-A1- 0 451 074
- WO-A1-2015/075356
- US-A1- 2015 189 831

## Description

La présente invention concerne le domaine des machines agricoles, portées, tractées ou poussées, en particulier du type glissant en appui sur le sol en utilisation normale, telles que les machines de récolte, de fauche ou de traitement des végétaux.

L'invention porte plus particulièrement sur une machine agricole du type visé ci-dessus avec un système de sécurité présentant une cinématique de déclenchement améliorée.

Quelle que soit leur nature exacte, les machines agricoles concernées par l'invention ont toutes pour points communs de se déplacer normalement selon une direction d'avance au travail et de comprendre chacune :
- un support d'attelage,
- au moins un outil ou groupe d'outils présentant, en position de travail, une extension transversale à la direction d'avance et latérale par rapport au support d'attelage,
- au moins un bras porteur relié au support d'attelage, par l'intermédiaire d'une première articulation, et à l'outil ou au groupe d'outils considéré, ledit bras porteur étant monté pivotant autour d'un axe, dit de transfert, sensiblement parallèle au plan du sol lorsque la machine est attelée et autour duquel l'outil ou le groupe d'outils peut être transféré alternativement entre une position de travail, dans laquelle il est au moins partiellement en appui sur le sol, et au moins une position soulevée, dans laquelle il est éloigné du sol, et
- un dispositif de sécurité par l'intermédiaire duquel l'outil ou le groupe d'outils considéré peut effectuer un mouvement de sécurité sous l'effet d'une pression suffisante sur lui selon une direction opposée à la direction d'avance, ce mouvement de sécurité comprenant au moins une première phase de mouvement dont au moins une composante est une rotation vers l'arrière, ce par rapport à la direction d'avance, et autour de la première articulation.

En effet, lors de leur utilisation, ces machines peuvent heurter une pierre, une souche ou un obstacle analogue proéminent par rapport au sol et figé dans ce dernier, potentiellement occulté(e) par les végétaux. Pour éviter un endommagement de l'outil ou du groupe d'outils, du support d'attelage et/ou des liaisons entre ces éléments, du fait d'un impact brutal, le dispositif de sécurité bascule de manière connue l'outil ou le groupe d'outils vers l'arrière, pour absorber le choc, compenser l'avance de la machine par rapport à l'obstacle et permettre audit outil ou groupe d'outils de disposer davantage de temps pour surmonter l'obstacle, en passant par-dessus par glissement ou après soulèvement.

De nombreuses solutions sont déjà connues qui permettent de réaliser cette fonction.

Dans ces machines connues, l'axe de transfert précité détermine également la position de transport et d'éventuelles positions intermédiaires, comme par exemple une position de passage d'andains dans le cas d'une faucheuse ou d'une faneuse.

De telles machines agricoles sont par exemple connues des documents FR 2 384 431, EP 2 189 053 et EP 2 926 643.

Une variante constructive de telles machines, dans laquelle l'axe de transfert est un axe vertical (la position de transport étant obtenue par repliement vers l'arrière, parallèlement à la direction d'avance), est connue du document EP 0 679 327.

Les documents FR 2 384 431 et EP 2 189 053 divulguent en outre la présence de moyens supplémentaires entraînant, en plus du pivotement vers l'arrière, également un décollement de l'outil ou du groupe d'outils du sol lorsque la pression exercée par l'obstacle est suffisante et persiste malgré le repliement vers l'arrière.

De manière similaire, et plus particulièrement en relation avec une faucheuse, le document EP 2 926 643 fait aussi état de moyens additionnels entraînant un relèvement, mais de la partie frontale uniquement, de l'outil ou du groupe d'outils, destiné à faciliter le passage par-dessus l'obstacle, souvent de faible taille.

Toutefois, ces solutions connues de systèmes de sécurité sont de construction complexe, nécessitent plusieurs organes actifs différents ou encore réalisent des actions difficilement contrôlables avec précision.

La présente invention a pour objet de pallier au moins les principaux inconvénients cités précédemment.

A cet effet, la solution au problème technique est apportée par l'objet de la revendication indépendante 1, définissant en soi l'invention. Des modes de réalisation préférés sont décrits dans les revendications dépendantes.

L'invention sera mieux comprise, grâce à la description ci-après, qui se rapporte à des modes de réalisations préférés, donnés à titre d'exemples non limitatifs, et expliqués avec référence aux dessins schématiques annexés, dans lesquels :
les figures 1A à 1D sont des vues, respectivement en perspective (figure 1A ), de devant (figure 1B - selon la direction opposée à la direction d'avance), de droite (figure 1C) et de dessus (figure 1D), d'une machine agricole selon l'invention, sous la forme d'une barre de fauche à disques rotatifs, en position normale de travail (absence d'obstacle), les équipements accessoires étant enlevés (circuits d'alimentation hydraulique, capotage, habillage, entraînement, ...) ;
les figures 2A à 2C sont des vues, respectivement de devant (2A), de droite (2B) et de dessus (2C), de la machine agricole représentée sur les figures 1, cette dernière se trouvant dans la première phase du mouvement de sécurité sous la pression exercée par un obstacle au sol, non représenté (groupe d'outils basculé vers l'arrière et avec bord avant relevé) ;
les figures 3A à 3C sont des vues, respectivement de devant (3A), de droite (3B) et de dessus (3C), de la machine agricole représentée sur les figures 1 et 2, cette dernière se trouvant dans la seconde phase du mouvement de sécurité sous la pression exercée par un obstacle au sol, non surmonté à la fin de la première phase dudit mouvement (groupe d'outils basculé vers l'arrière et soulevé à distance du sol, le bord avant étant toujours relevé) ;
la figure 4 est une vue de devant de la machine agricole des figures 1 à 3 en position relevée de transport ;
la figure 5 est une vue de devant de la machine agricole des figures 1 à 4 en position dite de passage d'andains, et
les figures 6 et 7 sont des vues de dessus d'une machine agricole du type représenté sur les figures 1 à 5, équipée d'une variante de réalisation du moyen de relèvement, représentée en position normale de travail.

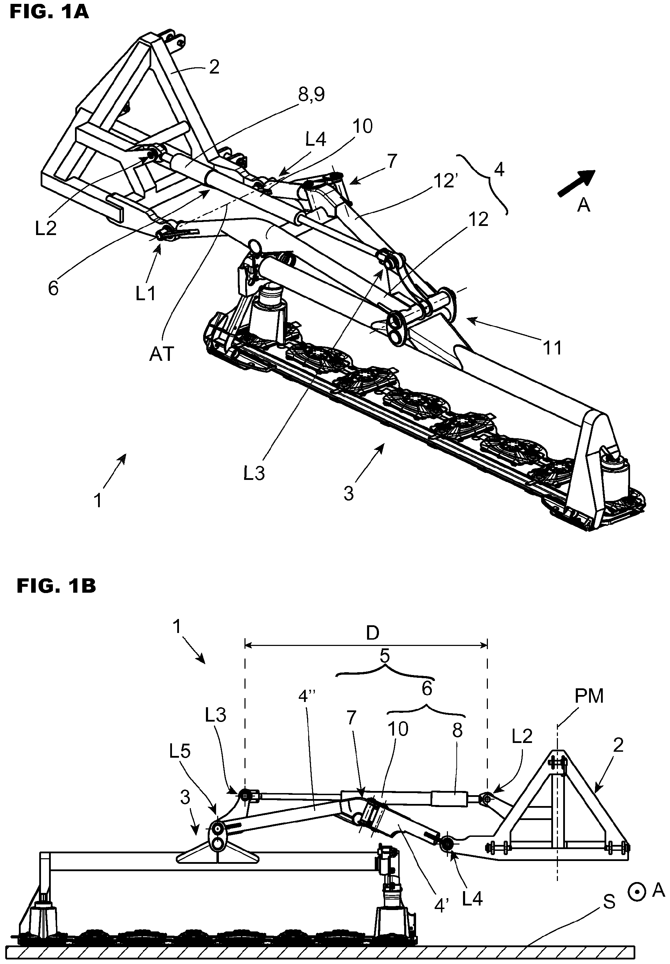

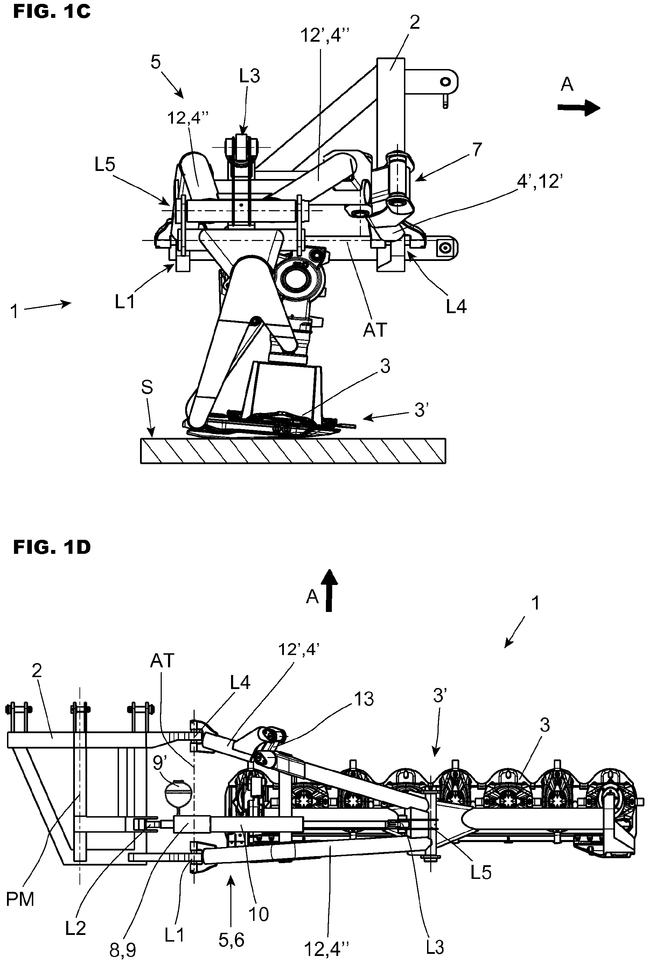

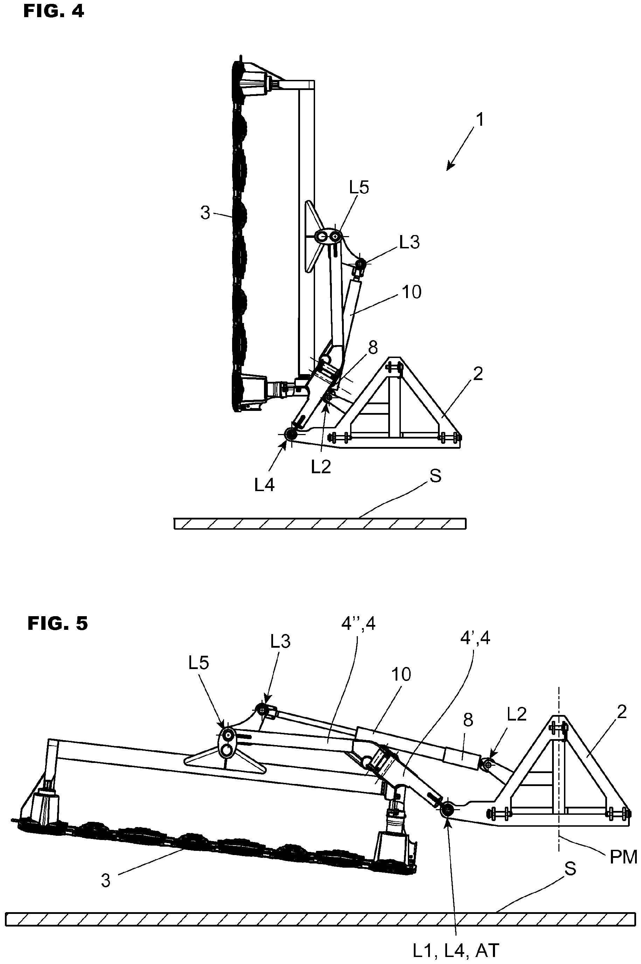

Les figures 1 à 7 illustrent de manière simplifiée une machine agricole 1, se déplaçant normalement selon une direction d'avance A au travail et comprenant :
- un support d'attelage 2,
- au moins un outil ou groupe d'outils 3 présentant, en position de travail, une extension transversale à la direction d'avance A et latérale par rapport au support d'attelage 2,
- au moins un bras porteur 4 relié au support d'attelage 2, par l'intermédiaire d'une première articulation L1, et à l'outil ou au groupe d'outils 3 considéré, ledit bras porteur 4 étant monté pivotant autour d'un axe AT, dit de transfert, sensiblement parallèle au plan du sol S lorsque la machine 1 est attelée et autour duquel l'outil ou le groupe d'outils 3 peut être transféré alternativement entre une position de travail, dans laquelle il est au moins partiellement en appui sur le sol S, et au moins une position soulevée, dans laquelle il est éloigné du sol S,
- un dispositif de sécurité 5 par l'intermédiaire duquel l'outil ou le groupe d'outils 3 considéré peut effectuer un mouvement de sécurité sous l'effet d'une pression P suffisante selon une direction opposée à la direction d'avance A, ce mouvement de sécurité comprenant au moins une première phase de mouvement dont au moins une composante est une rotation vers l'arrière, ce par rapport à la direction d'avance A, et autour de la première articulation L1.

En outre, ledit dispositif de sécurité 5 comprend un moyen de relèvement 6 relié au support d'attelage 2 par une deuxième articulation L2 et à l'outil ou au groupe d'outils 3, ou au bras porteur 4, par une troisième articulation L3. Ce moyen de relèvement 6 présente avantageusement une plage de fonctionnement déterminée. Dans cette plage, le moyen de relèvement 6 est positivement actif, et éventuellement commandable.

De plus, la deuxième articulation L2 est décalée relativement à la direction d'avance A par rapport à la première articulation L1 et la première articulation L1 relie directement le bras porteur 4 au support d'attelage 2.

En outre, le mouvement de sécurité peut comporter une deuxième phase de mouvement consécutive de la première phase et dans laquelle le moyen de relèvement 6 est dans un état butoir dans lequel il exerce sur l'outil ou le groupe d'outils 3 considéré, si la pression P persiste dans le cadre de cette deuxième phase de mouvement, une force dirigée vers le haut de sorte à éloigner du sol S ledit outil ou groupe d'outils 3 considéré. En plus, ce dernier peut éventuellement poursuivre sa rotation vers l'arrière (si la pression P persiste). La pression P peut être exercée sur l'outil ou le groupe d'outils 3 ou sur le bras porteur 4.

Grâce aux dispositions précités, l'invention propose une solution simple, robuste, économique et fiable pour effectuer un mouvement de dégagement sécuritaire lorsque l'outil ou le groupe d'outils 3 rencontre, en cours d'avancement de la machine 1, un obstacle qu'il ne peut écarter, ni surmonter en position normale de travail.

En prévoyant deux phases de mouvement de sécurité, l'invention permet de fournir une réponse graduée à deux niveaux, en termes d'action, pour passer l'obstacle en continuant d'avancer, ce en fonction de l'importance (taille, poids, résistance à l'arrachement, ...) de l'obstacle rencontré. De plus, en lui affectant une fonction additionnelle par exploitation d'un état spécifique (défini constructivement), ce en relation avec un arrangement à configuration particulière en termes de positionnement et de liaison, l'invention peut utiliser avantageusement, le cas échéant, un moyen déjà existant sur la machine 1 pour participer à la réalisation de la seconde phase du mouvement de sécurité. Enfin, le mouvement d'éloignement du sol résulte directement et exclusivement de dispositions constructives (état butoir, arrangement, structure, dimensions et fixation du moyen de relèvement 6, ...) et est réalisé automatiquement et progressivement à partir du moment où l'état butoir est atteint, ce sans nécessiter de commande.

Par état butoir, on entend dans la présente, dans le cas d'un moyen de relèvement 6 déformable ou repliable avec modification (augmentation ou diminution) d'au moins une dimension, une configuration atteinte par ledit moyen 6 à la fin de la première phase de mouvement de sécurité et dans laquelle toute modification supplémentaire dans le même sens est rendue (physiquement) impossible, le moyen 6 se comportant alors comme un élément de liaison rigide et indéformable en regard d'une modification additionnelle de ladite au moins une dimension.

Ainsi, lorsque le moyen de relèvement 6 atteint l'état butoir, la première phase du mouvement de sécurité prend fin, et la deuxième phase du mouvement de sécurité débute. D'autre part, lorsque le mouvement de sécurité est dans sa deuxième phase, le moyen de relèvement 6 est en état butoir. Dans l'état butoir, si la pression P persiste, le moyen de relèvement 6 exerce sur l'outil ou le groupe d'outils 3 considéré une force ou sollicitation dirigée vers le haut, qui permet d'écarter progressivement du sol S ledit outil ou groupe d'outils 3 considéré, en plus éventuellement de la poursuite de la rotation vers l'arrière de ce dernier.

Préférentiellement, la deuxième articulation L2 est, en position normale de travail, également décalée relativement au sol S par rapport à la première articulation L1.

Avantageusement, le moyen de relèvement 6 est configuré pour, d'une part, autoriser une variation de la distance D entre les deuxième et troisième articulations L2 et L3 sur une plage de longueurs déterminée, et, d'autre part, atteindre un état butoir dans lequel ladite distance D présente une valeur maximale ou minimale, et dans lequel ledit moyen de relèvement 6 exerce une force dirigée vers le haut.

Cette sollicitation vers le haut (par rapport au plan du sol) amène progressivement l'outil ou le groupe d'outils 3 à s'écarter du sol au cours de la deuxième phase du mouvement de sécurité, en cas de persistance de la pression P et en fonction de l'avancement de la machine 1.

La valeur minimale ou maximale de la distance D est atteinte lorsque le moyen de relèvement atteint son état butoir, à la fin de la première phase du mouvement de sécurité.

Lors de la première phase du mouvement de sécurité, le moyen de relèvement 6 est dans un état dit lâche. Dans l'état lâche, le moyen de relèvement 6 autorise une variation de la distance D entre les deuxième et troisième articulations L2 et L3 sur une plage de longueurs déterminée.

Dans la pratique, le choix du moyen de relèvement 6 et le réglage de sa course (la fin de course correspondant à l'état butoir) déterminent les circonstances définissant le début de la deuxième phase du mouvement de sécurité. Le fait de relier l'état butoir à la longueur maximale admissible par un élément de la machine permet de réaliser sûrement et simplement l'éloignement de l'outil ou du groupe d'outils 3 par rapport au sol. Un angle d'inclinaison (pivotement autour de l'articulation L1 en vue de dessus) d'environ 5° à 15° de l'outil ou du groupe d'outils 3 (plus précisément entre 10° et 11°) vers l'arrière par rapport à un plan perpendiculaire à la direction d'avance A, ou à sa position normale de travail, constitue un bon compromis pour le choix de la fin de la première phase et le début de la deuxième phase du mouvement de sécurité.

Préférentiellement, l'invention peut prévoir que, en position de travail de l'outil ou du groupe d'outils 3, la distance D varie entre, d'une part, une valeur minimale correspondant à la position normale de travail de l'outil ou du groupe d'outils 3 et, d'autre part, une valeur maximale. Cette valeur maximale peut être atteinte à la fin de la première phase ou au cours de la deuxième phase du mouvement de sécurité. En position normale de travail, aucun obstacle n'exerce de pression P suffisante sur l'outil ou le groupe d'outils 3, ni sur le bras porteur 4, pour déclencher le mouvement de sécurité.

En vue de garantir un maintien de l'outil ou du groupe d'outils 3 en position normale de travail, en coopération avec la première articulation L1, le bras porteur 4 est aussi avantageusement relié directement au support d'attelage 2 par l'intermédiaire d'une quatrième articulation L4 décalée vers l'avant par rapport à la première articulation L1, dans la direction d'avance A. De plus, la quatrième articulation L4 est décalée vers le bas en direction du sol S, par rapport à la deuxième articulation L2. De préférence, la quatrième articulation L4 est située sensiblement à la même distance par rapport au plan du sol que la première articulation L1. Comme cela ressort des figures annexées, la première articulation L1 relie le bras porteur 4 directement au support d'attelage 2, ainsi que la quatrième articulation L4 (qui relie également directement le bras porteur 4 au support d'attelage 2).

Par liaison ou assemblage direct(e), on entend dans la présente un assemblage entre bras porteur 4 et support d'attelage 2 sans pièce ou élément intermédiaire additionnel(le), c'est-à-dire autre que l'articulation L1 et, le cas échéant, la quatrième articulation L4. Lorsque les deux articulations précitées sont présentes, la liaison articulée directe entre support 2 et bras 4 consiste en une liaison pivot autour de l'axe de transfert AT.

En accord avec une première variante de réalisation, ressortant des figures 1 à 7, la machine 1 peut comporter, le cas échéant pour chaque bras porteur 4, un dispositif 7 de guidage permettant une variation de la distance entre la troisième articulation L3 ou une extrémité libre 11 du bras porteur 4, d'une part, et la ou une quatrième articulation L4 reliant le bras porteur 4 au support d'attelage 2, d'autre part. L'extrémité libre 11 du bras porteur 4 est située à l'opposé du support d'attelage 2. Le moyen de relèvement 6 est relié à l'outil ou au groupe d'outils 3 ou au bras porteur 4 par la troisième articulation L3 qui est décalée vers l'extrémité libre 11 du bras 4.

En accord avec une seconde variante de réalisation pouvant être mise en oeuvre alternativement ou cumulativement avec la première variante précitée, la machine 1 peut comporter, le cas échéant pour chaque bras porteur 4, un dispositif 7 de guidage permettant une variation de la distance entre la première articulation L1, d'une part, et la troisième articulation L3 ou l'extrémité libre 11 du bras porteur 4, d'autre part.

En prévoyant un tel dispositif 7, le bras porteur 4 dispose d'une possibilité de modification de forme, au moins limitée, autorisant les deux phases du mouvement de sécurité sans compromettre les fonctions premières dudit bras 4, à savoir le support, le maintien en position et le déplacement entre les différentes positions opérationnelles illustrées de l'outil ou du groupe d'outils 3.

Le dispositif de guidage 7 peut également permettre de limiter l'amplitude du mouvement de sécurité. Lorsque la deuxième phase du mouvement de sécurité est atteinte, l'outil ou le groupe d'outils 3 se trouve en position dite déclenchée.

Conformément à une caractéristique de l'invention, permettant de limiter le nombre de points de fixation articulés entre le bras porteur 4 et le support d'attelage 2, l'invention peut prévoir que l'axe de transfert AT passe par la première articulation L1.

Selon une construction préférée, l'axe de de transfert AT est défini par coopération des première et quatrième articulations L1 et L4, autrement dit lesdites articulations L1 et L4 définissent ensemble ledit axe AT. Il est alors fixe par rapport au support d'attelage 2. Ce support d'attelage 2 est destiné à être lié à un tracteur ou véhicule analogue non représenté.

Ainsi, ces deux articulations L1 et L4 guident à la fois le mouvement de sécurité et les mouvements de transfert entre la position de travail au sol et l'une des autres positions prédéterminées éloignées du sol (transport, passage d'andains).

Comme le montrent les figures annexées, la machine 1 comporte au moins un premier vérin 8 pour le maintien contrôlé de l'outil ou du groupe d'outils 3 dans sa position normale de travail, ce premier vérin 8 autorisant l'outil ou le groupe d'outils 3 à effectuer la première phase du mouvement de sécurité. Ledit premier vérin 8 peut autoriser l'outil ou le groupe d'outils 3 à effectuer la première phase du mouvement de sécurité, librement ou préférentiellement en opposant une sollicitation prédéterminée résistive audit mouvement de sécurité, ce premier vérin 8 faisant partie du dispositif de sécurité 5. Dans ce dernier cas, la position de fin de course définit l'état butoir (pas besoin de butée spécifique) et la totalité de la course du premier vérin 8 est exploitée. Le premier vérin 8 engendre ainsi la contrainte résistive maintenant l'outil ou le groupe d'outils 3 dans sa position normale de travail. Cela revient à dire que le premier vérin 8 engendre la contrainte résistive maintenant la distance D à sa valeur minimale.

De manière avantageuse, la deuxième articulation L2 est, en position normale de travail, décalée vers l'avant, relativement à la direction d'avance A, et vers le haut, à l'opposé du sol S, par rapport à la première articulation L1. De plus, le moyen de relèvement 6 en état butoir peut être avantageusement un tirant apte à transmettre un effort de traction entre l'outil ou groupe d'outils 3, d'une part, et le support d'attelage 2, d'autre part (préférentiellement dès le début de la seconde phase du mouvement de sécurité).

Une telle conception est avantageuse du fait qu'elle minimise l'encombrement total de la machine 1, qu'elle évite de décaler le centre de gravité de la machine 1 vers l'arrière et qu'elle permet de maintenir une certaine garde au sol correspondant à la distance entre la machine 1 et le sol S en position de passage d'andains (dans le cas d'une machine de fauche ou de fenaison par exemple).

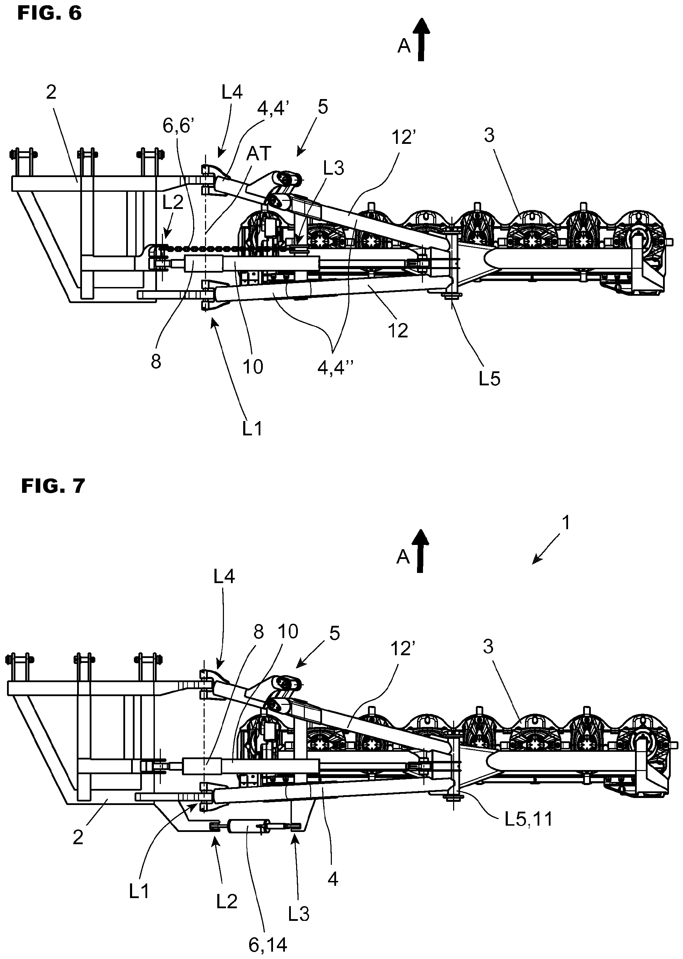

Le dispositif de sécurité 5 peut ainsi comporter, soit le premier vérin 8 (conçu et arrangé pour être dans un état butoir en fin de première phase du mouvement de sécurité - figures 1 à 5 et figure 7), soit un moyen de liaison 6' du type chaîne, câble ou analogue (figure 6 - conçu et arrangé pour être dans un état inextensible en fin de première phase du mouvement de sécurité). La fin de première phase du mouvement correspond à l'atteinte de la valeur maximale de la distance D entre les deuxième et troisième articulations L2 et L3 au cours du mouvement de sécurité. Que le moyen de relèvement 6 comporte le premier vérin 8 ou un moyen de liaison 6', il est détendu et/ou inapte à transmettre une traction en position normale de travail ainsi que durant la première phase de mouvement de sécurité.

Un tel tirant du type passif (moyen de liaison) peut être monté en parallèle avec un deuxième vérin 10 de soulèvement, sans être nécessairement fixé par les mêmes articulations ou sites au bras porteur 4 et/ou au support d'attelage 2.

En utilisant comme moyen de relèvement 6 le premier vérin 8, l'invention autorise un réarmement à distance (depuis le véhicule tracteur - non représenté) du dispositif de sécurité 5 (par commande par pression hydraulique).

En outre, compte tenu de l'arrangement du moyen de relèvement 6 (disposition relative des articulations L2 et L3 par rapport aux articulations L1 et L4), le dispositif de sécurité 5 est situé essentiellement au-dessus du bras porteur 4 et de l'outil ou du groupe d'outils 3.

Afin de disposer d'une certaine liberté pour la trajectoire guidée de l'outil ou du groupe d'outils 3, et autoriser ainsi la combinaison simultanée de plusieurs mouvements élémentaires, durant les deux phases du mouvement de sécurité, tout en limitant le nombre d'articulations et en autorisant le déplacement vers et depuis les autres positions fonctionnelles (transport, passage d'andains, déclenchée) dudit outil ou groupe d'outils 3, il peut être avantageusement prévu que chacune des première, deuxième et quatrième articulations L1, L2 et L4 autorise, d'une part, au moins une rotation limitée autour d'un axe sensiblement parallèle au plan du sol S et sensiblement parallèle à la direction d'avance A et, d'autre part, au moins une rotation limitée autour d'un axe sensiblement perpendiculaire au plan du sol S.

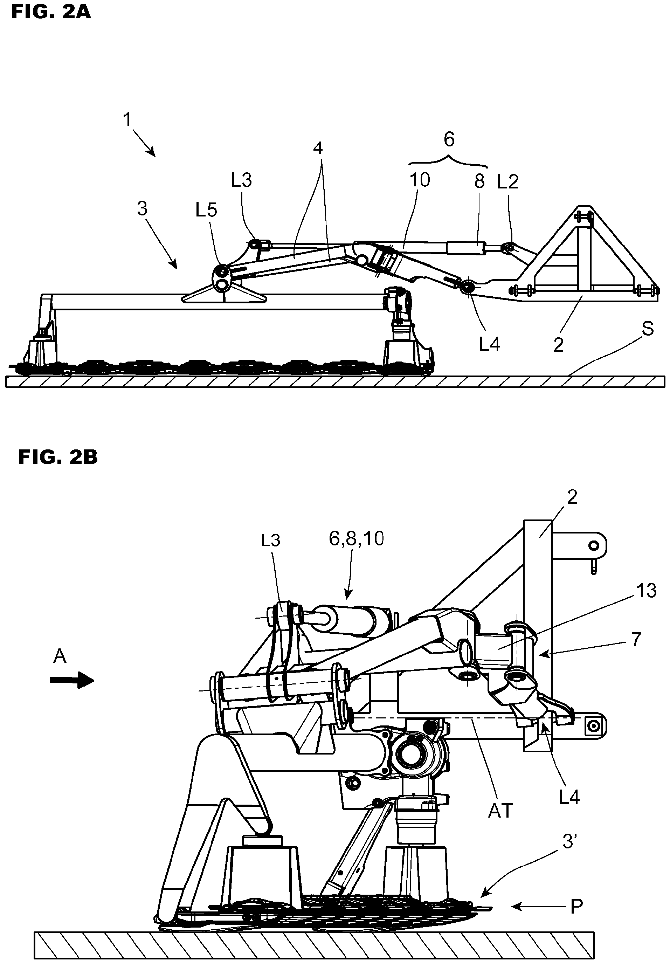

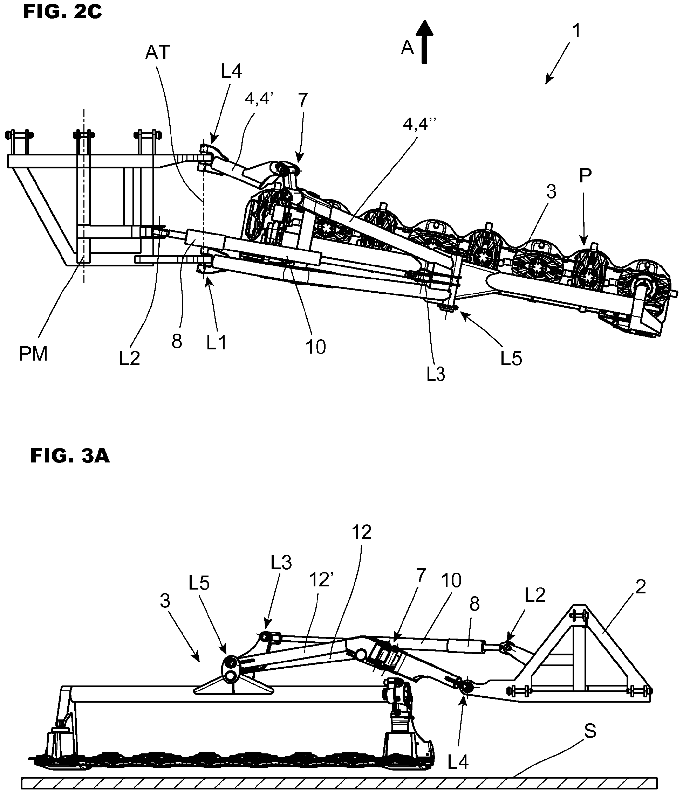

Comme cela ressort d'une comparaison des figures 1 et 2, et plus particulièrement en relation avec une machine 1 équipée d'un outil ou d'un groupe d'outils 3 incliné vers l'avant en position normale de travail (piquage), il peut être prévu que le dispositif 7 de guidage du ou d'un bras porteur 4 considéré soit configurer pour exercer une force à l'avant de l'outil ou du groupe d'outils 3, de sorte à le basculer vers le haut par rotation autour de la première articulation L1, ce déjà durant la première phase du mouvement de sécurité.

Une telle disposition (forçage automatique d'un pivotement vers le haut) favorise bien entendu le passage de l'outil ou du groupe d'outils 3 sur des obstacles saillants de faible taille, durant la première phase du mouvement de sécurité (figures 2).

Préférentiellement, le dispositif 7 de guidage (par exemple du type à genouillère avec deux axes de pivotement parallèles) est maintenu activement en position repliée sous l'effet d'une sollicitation contrôlée fournie par le premier vérin 8 (et/ou par un autre vérin additionnel 14), maintenant également l'outil ou le groupe d'outils 3 en position normale de travail.

Comme le montrent également les figures annexées, la deuxième articulation L2 est située plus proche d'un plan médian PM du support d'attelage 2, perpendiculaire au plan du sol S et parallèle à la direction d'avance A, que la première articulation L1. Préférentiellement, chacune des première, deuxième et quatrième articulations L1, L2 et L4 est une articulation à rotule. Une telle conception de la machine 1 permet avantageusement au bras porteur 4 de suivre le basculement vers le haut de l'avant de l'outil ou du groupe d'outils 3 lors de son pivotement autour de la première articulation L1.

Toutefois, en variante (non représentée), les articulations L1 et L4 au moins peuvent être réalisées sous la forme de joints universels (à croisillons), leurs axes verticaux étant alors parallèles aux deux axes de pivotement de la genouillère constituant le dispositif de guidage 7. Cette variante n'autorise néanmoins pas le pivotement vers le haut de l'avant de l'outil ou du groupe d'outils 3 lors du mouvement de sécurité.

En relation avec les figures 1 à 3, on peut noter que les deux phases successives du mouvement de sécurité se présentent comme suit :
- La première phase comprend une composante de rotation par rapport au support d'attelage 2 vers l'arrière autour de la première articulation L1. Elle comprend un pivotement autour d'un axe vertical passant par L1. Elle comprend aussi un pivotement autour d'un axe horizontal ou parallèle au sol S, transversal à la direction d'avance A et passant par L1, et elle peut également comprendre une composante de pivotement vers le haut autour de l'axe de transfert AT.
- La deuxième phase comprend quant à elle un pivotement autour d'un axe vertical passant par L1, ainsi qu'un pivotement autour d'un axe passant par L1 et L2.

On note également que le moyen de relèvement 6 contraint la totalité de l'outil ou du groupe d'outils 3 à effectuer un pivotement autour de l'axe passant par L1 et L2.

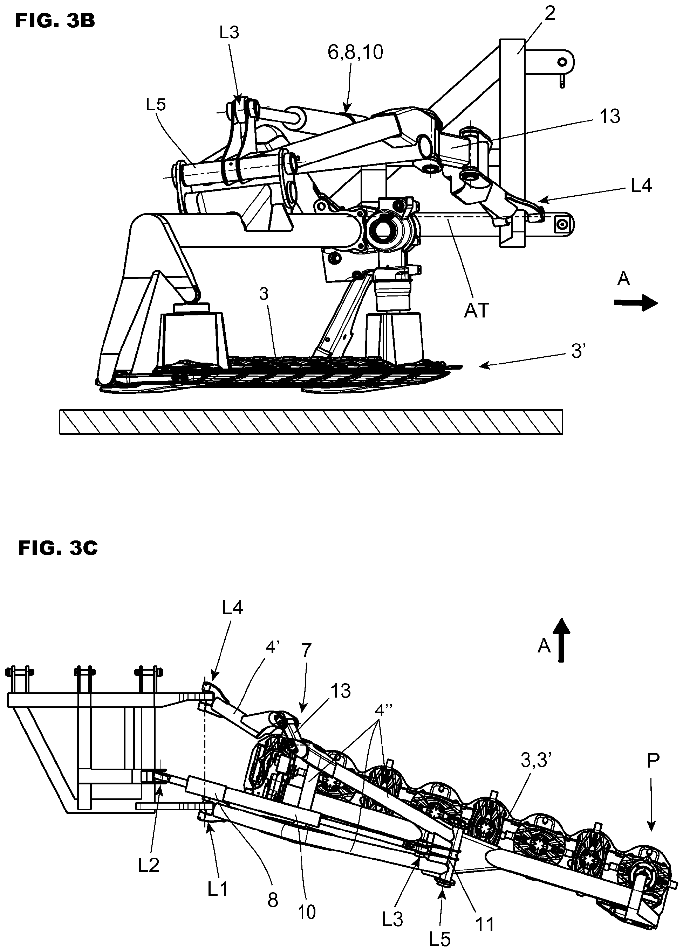

De plus, lors du mouvement de sécurité, l'outil ou le groupe d'outils 3 effectue une rotation conjointement avec au moins une partie du bras porteur 4. De manière générale, l'outil ou le groupe d'outils 3 effectue le mouvement de sécurité par rapport au support d'attelage 2 conjointement avec le bras porteur 4. Ainsi qu'il ressort des figures 2 et 3, l'outil ou le groupe d'outils 3 effectue le mouvement de sécurité conjointement avec le moyen de relèvement 6.

En vue d'adapter la position de l'outil ou du groupe d'outils 3 aux dénivellations du terrain, la machine 1 peut comporter un moyen d'allègement 9 de la force d'appui au sol de l'outil ou du groupe d'outils 3, ledit moyen d'allègement 9 consistant avantageusement en un accumulateur d'énergie.

Pour limiter les déclenchements intempestifs du dispositif de sécurité 5, et réduire au maximum le nombre de vérins mis en oeuvre, il est avantageusement prévu que le premier vérin 8 faisant partie du moyen de relèvement 6, ou constituant à lui seul ce moyen, est relié à un accumulateur de pression 9' pour constituer le moyen d'allègement 9 (figure 1D).

Dans ce cas, le premier vérin 8, et le cas échéant le moyen d'allègement 9, assure le maintien en position normale de travail de l'outil ou du groupe d'outils 3, fournit l'effort résistant à surmonter pour enclencher la première phase du mouvement de sécurité et sert de tirant en fin de course pour relever automatiquement l'outil ou le groupe d'outils 3 durant la seconde phase du mouvement de sécurité, par déplacement autour de la liaison à rotule formant la première articulation L1. De plus, le moyen d'allègement 9 permet également de faire diminuer la force d'appui au sol de de l'outil ou du groupe d'outils 3, lors de l'allongement de la distance D entre les deuxième et troisième articulations L2 et L3, facilitant ainsi le passage d'obstacles de faible taille, sans nécessiter l'enclenchement de la seconde phase du mouvement de sécurité. Autrement dit durant la première phase du mouvement de sécurité, composé d'au moins une rotation vers l'arrière autour de la première articulation L1 de l'outil ou du groupe d'outils 3 par rapport au support d'attelage 2, le moyen d'allègement 9 engendre un couple dirigé vers le haut sur le bras 4 et autour de l'axe de transfert AT, sans forcément décoller l'outil ou le groupe d'outils 3 du sol S.

Afin de pouvoir assurer le déplacement de l'outil ou du groupe d'outils 3 entre les différentes positions usuelles nécessaires au bon fonctionnement et au transport de la machine 1, cette dernière comporte, le cas échéant pour chaque outil ou groupe d'outils 3, un deuxième vérin 10 dit de soulèvement configuré pour transférer alternativement l'outil ou le groupe d'outils 3 considéré, entre la position de travail et au moins une position soulevée intermédiaire ou finale, par pivotement autour de l'axe de transfert AT.

Préférentiellement, et en accord avec une réalisation pratique, simple et peu encombrante, le deuxième vérin 10, ou vérin de soulèvement, est associé constructivement au moyen de relèvement 6 et est avantageusement solidaire et arrangé coaxialement dans le prolongement du premier vérin 8 faisant partie dudit moyen de relèvement 6 et configuré pour être à la fin de la première phase du mouvement de sécurité dans un état butoir en allongement.

Conformément à un mode de réalisation préféré de l'invention, ressortant des figures 1 à 7, le ou chaque bras porteur 4 comprend une première partie constitutive avant 4' reliée directement au support d'attelage 2 par l'intermédiaire d'une ou de la quatrième articulation L4 et une seconde partie constitutive arrière 4" reliée directement au support d'attelage 2 par l'intermédiaire de la première articulation L1, lesdits première et seconde parties constitutives 4' et 4" étant reliées entre elles par le ou un dispositif de guidage 7. Dans cette réalisation, la seconde partie 4" comporte l'extrémité libre 11 du bras porteur 4, ainsi que la troisième articulation L3.

En variante, il peut aussi être prévu que la première partie avant 4', reliée au support d'attelage 2 par l'articulation L4, comprenne l'extrémité libre 11 et l'articulation L3, au détriment de la seconde partie arrière 4", reliée au support d'attelage 2 par l'articulation L1.

Quelle que soit la partie constitutive du bras 4 portant l'extrémité libre 11 et l'articulation L3, le dispositif de guidage 7 autorise une déformation du bras porteur 4, de sorte à autoriser le bras porteur 4 à effectuer une rotation autour de L1 sans déplacer la quatrième articulation L4, cette déformation permettant de désaligner la partie 4' de la partie 4". De préférence cette déformation permet de former un angle (différent de 180°) entre la partie 4' et la partie 4".

Plus précisément, et selon une variante constructive avantageuse ressortant des figures 1 à 7, le ou chaque bras porteur 4 peut présenter une structure en forme de A, dont le sommet est relié à l'outil ou au groupe d'outils 3, par exemple par l'intermédiaire d'une cinquième articulation L5, et dont les deux branches 12 et 12' sont reliées, au niveau de leurs extrémités opposées au sommet, respectivement par la première articulation L1 et par la ou une quatrième articulation L4, au support d'attelage 2.

Comme décrit plus haut, le dispositif de guidage 7 peut être intégré soit dans la branche avant 12' (figures 1 à 7), soit dans la branche arrière 12 de la structure en A.

Sur les figures annexées, ces deux branches 12 et 12' sont reliées rigidement par une traverse. Bien entendu, plusieurs traverses (ou tout autre moyen de solidarisation rigide) peuvent être envisagées.

Une telle structure de bras porteur 4 est plus particulièrement décrite et illustrée dans la demande de brevet français n° 1760994 du 21 novembre 2017 au nom de la demanderesse, les différentes variantes de réalisation faisant l'objet de cette demande de brevet et plus généralement l'intégralité du contenu de cette dernière étant intégrées à la présente par référence.

Comme cela ressort des figures annexées, l'articulation L5 est par exemple une liaison pivot avec un axe sensiblement parallèle à la direction d'avance A en position normale de travail (absence de pression P suffisante pour déplacer le groupe d'outils 3 vers l'arrière - extension du groupe d'outils 3 selon une direction sensiblement perpendiculaire au plan médian PM - figures 1), réalisant un accrochage pendulaire des outils 3.

En outre, l'articulation L3 est située au-dessus du bras porteur 4, de sorte que les premier vérin 8 et deuxième vérin 10 sont également disposés nettement à distance au-dessus dudit bras 4.

L'outil ou le groupe d'outils 3 peut par exemple comprendre ou consister en un conditionneur ou un convoyeur.

La machine 1 peut être du type porté, semi-porté ou tracté. Dans ces deux derniers cas, un train de roues supporte au moins une partie du poids de la machine 1. Afin de pouvoir notamment fournir simplement une sollicitation en basculement vers le haut du bord avant de l'outil ou du groupe d'outils 3, utilisant le mouvement de pivotement vers l'arrière autour de la première articulation L1 lors de la première phase du mouvement de sécurité, il peut être prévu, comme le montrent les figures 1 à 5 annexées, que les deux branches 12 et 12' présentent toutes deux une forme courbée ou voûtée, avec des portions montantes et descendantes par rapport au plan contenant les deux extrémités extérieures desdites branches 12 et 12' et le sommet de la structure en A, le dispositif 7 de guidage étant intégré à l'une des desdites portions, ce en fonction de la variation de distance recherchée.

En accord avec une première variante, ressortant des figures 1 à 5, le dispositif 7 de guidage consiste en un mécanisme du type genouillère ou compas, comportant une biellette 13 reliée de manière articulée à ou aux deux parties constitutives 4' et 4" du bras porteur 4 considéré par l'intermédiaire de liaisons pivots à axes parallèles.

Dans une autre variante de réalisation alternative représentée figure 7, la deuxième articulation L2 est décalée vers l'arrière, relativement à la direction d'avance A, et vers le bas, plus proche du sol S, par rapport à la première articulation L1. De plus, la deuxième articulation L2 est située plus éloignée du plan médian PM que la première articulation L1. Le moyen de relèvement 6 peut alors comporter, ou encore consister en, un vérin additionnel 14 poussant, exerçant un couple vers l'avant et vers le haut autour de l'articulation L1 de manière à maintenir l'outil ou le groupe d'outils 3 en position normale de travail. L'état butoir du moyen de relèvement 6 est alors atteint lorsque le vérin additionnel 14 est rétracté jusqu'à sa fin de course. Ce vérin additionnel 14 peut également permettre d'augmenter l'allègement lors du mouvement de sécurité.

Dans le cadre de cette autre variante, la troisième articulation L3 est avantageusement située (en position de travail par rapport au plan du sol) au-dessus de la deuxième articulation L2, alors que dans les variantes des figures 1 à 6, c'est l'articulation L2 qui est avantageusement située au-dessus de l'articulation L3.

Bien que les figures 1 à 7 montrent une machine 1 avec un seul outil ou groupe d'outils 3, ladite machine 1 peut bien entendu comporter deux outils ou groupes d'outils 3 arrangés de part et d'autre du support d'attelage 2, préférentiellement de formes identiques et disposés de manière symétrique (par rapport au plan médian PM), reliés chacun au support d'attelage 2 par un bras porteur 4 spécifique et associés chacun à un dispositif de sécurité 5.

En relation avec une application préférée de l'invention, l'outil ou le groupe d'outils 3 consiste en un organe de fauche ou de traitement de végétaux coupés, ou en un groupe de tels organes, accroché par l'intermédiaire d'une liaison pivot L5, formant une ou la cinquième articulation avec un axe sensiblement parallèle à la direction d'avance A en position normale de travail, à l'extrémité libre 11 du bras support 4 opposée au support d'attelage 2, ladite machine 1 étant du type porté ou tracté.

## Revendications

1. Machine agricole (1), se déplaçant normalement selon une direction d'avance (A) au travail et comprenant :
- un support d'attelage (2),
- au moins un outil ou groupe d'outils (3) présentant, en position de travail, une extension transversale à la direction d'avance (A) et latérale par rapport au support d'attelage (2),
- au moins un bras porteur (4) relié, d'une part, au support d'attelage (2), par l'intermédiaire d'une première articulation (L1) et d'une quatrième articulation (L4) décalée vers l'avant par rapport à la première articulation (L1), dans la direction d'avance (A), et, d'autre part, à l'outil ou au groupe d'outils (3) considéré, ledit bras porteur (4) étant monté pivotant autour d'un axe (AT), dit de transfert, sensiblement parallèle au plan du sol (S) lorsque la machine (1) est attelée et autour duquel l'outil ou le groupe d'outils (3) peut être transféré alternativement entre une position de travail, dans laquelle il est au moins partiellement en appui sur le sol (S), et au moins une position soulevée, dans laquelle il est éloigné du sol (S),
- un dispositif de sécurité (5) par l'intermédiaire duquel l'outil ou le groupe d'outils (3) considéré peut effectuer un mouvement de sécurité sous l'effet d'une pression (P) suffisante sur ledit outil ou groupe d'outils (3) selon une direction opposée à la direction d'avance (A), ce mouvement de sécurité comprenant au moins une première phase de mouvement dont au moins une composante est une rotation vers l'arrière, ce par rapport à la direction d'avance (A), et autour de la première articulation (L1),
- le dispositif de sécurité (5) comprenant un moyen de relèvement (6) relié au support d'attelage (2) par une deuxième articulation (L2) et à l'outil ou au groupe d'outils (3), ou au bras porteur (4), par une troisième articulation (L3), machine (1) dans laquelle la première articulation (L1) relie directement le bras porteur (4) au support d'attelage (2),
**dans laquelle** la deuxième articulation (L2) est décalée relativement à la direction d'avance (A) par rapport à la première articulation (L1),
**dans laquelle la quatrième articulation (L4) est décalée vers le bas en direction du sol (S), par rapport à la deuxième articulation (L2),**
dans laquelle le moyen de relèvement (6) est configuré pour, d'une part, autoriser une variation de la distance (D) entre les deuxième et troisième articulations (L2 et L3) sur une plage de longueurs déterminée, et, d'autre part, atteindre un état butoir dans lequel ladite distance (D) présente une valeur maximale ou minimale, et dans lequel ledit moyen de relèvement (6) exerce une force dirigée vers le haut, et
dans laquelle chacune des première, deuxième et quatrième articulations (L1, L2 et L4) autorise, d'une part, au moins une rotation limitée autour d'un axe sensiblement parallèle au plan du sol (S) et sensiblement parallèle à la direction d'avance (A) et, d'autre part, au moins une rotation limitée autour d'un axe sensiblement perpendiculaire au plan du sol (S),
machine (10) **caractérisée en ce que**
la machine (10) est adaptée à ce que le mouvement de sécurité puisse comporter une deuxième phase de mouvement consécutive de la première phase dans laquelle le moyen de relèvement (6) est dans l'état butoir précité dans lequel il exerce sur l'outil ou le groupe d'outils (3) considéré, si la pression (P) persiste dans le cadre de cette deuxième phase de mouvement, une force dirigée vers le haut de sorte à éloigner du sol (S) ledit outil ou groupe d'outils (3) considéré.

2. Machine selon la revendication 1, **caractérisée en ce que** l'axe de transfert (AT) passe par la première articulation (L1).

3. Machine selon la revendication **1 ou 2**, **caractérisée en ce que** la première articulation (L1) et la quatrième articulation (L4) définissent ensemble l'axe de transfert (AT).

4. Machine selon l'une quelconque des revendications 1 à **3**, **caractérisée en ce qu'**elle comporte au moins un premier vérin (8) pour le maintien contrôlé de l'outil ou du groupe d'outils (3) dans sa position normale de travail, ce premier vérin (8) autorisant l'outil ou le groupe d'outils (3) à effectuer la première phase du mouvement de sécurité.

5. Machine selon l'une quelconque des revendications 1 à **4**, **caractérisée en ce que** la deuxième articulation (L2) est, en position normale de travail, décalée vers l'avant, relativement à la direction d'avance (A), et vers le haut, à l'opposé du sol (S), par rapport à la première articulation (L1), et **en ce que** le moyen de relèvement (6) en état butoir est un tirant apte à transmettre un effort de traction entre l'outil ou groupe d'outils (3), d'une part, et le support d'attelage (2), d'autre part.

6. Machine selon l'une quelconque des revendications 1 à **5**, **caractérisée en ce que** le dispositif de sécurité (5) peut comporter, soit le ou un premier vérin (8), soit un moyen de liaison (6') du type chaîne ou câble.

7. Machine selon l'une quelconque des revendications 1 à **6, caractérisée en ce qu'**elle comprend un dispositif (7) de guidage au niveau du ou d'un bras porteur (4) considéré qui est configuré pour exercer une force à l'avant (3') de l'outil ou du groupe d'outils (3) de sorte à le basculer vers le haut par rotation autour de la première articulation (L1), ce déjà durant la première phase du mouvement de sécurité.

8. Machine selon l'une quelconque des revendications 1 à **7, caractérisée en ce que** la deuxième articulation (L2) est située plus proche d'un plan médian (PM) du support d'attelage (2), perpendiculaire au plan du sol (S) et parallèle à la direction d'avance (A), que la première articulation (L1) et **en ce que** chacune des première, deuxième et quatrième articulations (L1, L2 et L4) est une articulation à rotule.

9. Machine selon l'une quelconque des revendications 1 à **8, caractérisée en ce qu'**elle comporte, le cas échéant pour chaque outil ou groupe d'outils (3), un vérin ou deuxième vérin (10) dit de soulèvement configuré pour transférer alternativement l'outil ou le groupe d'outils (3) considéré, entre la position de travail et au moins une position soulevée intermédiaire ou finale, par pivotement autour de l'axe de transfert (AT), et **en ce que** ce vérin (10) de soulèvement est associé constructivement au moyen de relèvement (6) et est avantageusement solidaire et arrangé coaxialement dans le prolongement du ou d'un premier vérin (8) faisant partie dudit moyen de relèvement (6) et configuré pour être à la fin de la première phase du mouvement de sécurité dans un état butoir en allongement.

10. Machine selon l'une quelconque des revendications 1 à **9**, **caractérisée en ce qu'**elle comporte deux outils ou groupes d'outils (3) arrangés de part et d'autre du support d'attelage (2), préférentiellement de formes identiques et disposés de manière symétrique par rapport à un plan médian (PM) dudit support d'attelage (2), reliés chacun au support d'attelage (2) par un bras porteur (4) spécifique et associés chacun à un dispositif de sécurité (5).

11. Machine selon l'une quelconque des revendications 1 à **10**, **caractérisée en ce que** l'outil ou le groupe d'outils (3) consiste en un organe de fauche ou de traitement de végétaux coupés, ou en un groupe de tels organes, accroché par l'intermédiaire d'une liaison pivot (L5), formant une ou la cinquième articulation avec un axe sensiblement parallèle à la direction d'avance (A) en position normale de travail, à l'extrémité libre (11) du bras support (4) opposée au support d'attelage (2), ladite machine (1) étant du type porté ou tracté.

## Patentansprüche

1. Landwirtschaftliche Maschine (1), die sich normal in eine Arbeitsvorschubrichtung A bewegt und Folgendes umfasst:
- ein Kupplungsauflager (2),
- mindestens ein Werkzeug oder eine Werkzeuggruppe (3), das oder die in der Arbeitsposition eine quer zur Vorschubrichtung (A) und seitlich in Bezug auf das Kupplungsauflager (2) ausgerichtete Verlängerung aufweist,
- mindestens einen Tragarm (4), der einerseits mit dem Kupplungsauflager (2) über ein erstes Gelenk (L1) und ein viertes Gelenk (L4), das in Bezug auf das erste Gelenk (L1) nach vorne, in Vorschubrichtung (A), versetzt ist, und andererseits mit dem betreffenden Werkzeug oder der betreffenden Werkzeuggruppe (3) verbunden ist, wobei der Tragarm (4) um eine so genannte Übertragungsachse (AT) schwenkbar montiert ist, die sich, wenn die Maschine (1) angehängt ist, im Wesentlichen parallel zur Bodenebene (S) erstreckt und um die das Werkzeug oder die Werkzeuggruppe (3) wechselweise zwischen einer Arbeitsposition, in der es oder sie zumindest teilweise auf dem Boden (S) aufliegt, und mindestens einer angehobenen Position, in der es oder sie vom Boden (S) entfernt ist, bewegt werden kann,
- eine Sicherheitsvorrichtung (5), mit der das betreffende Werkzeug oder die betreffende Werkzeuggruppe (3) eine Sicherheitsbewegung unter Einwirkung eines ausreichenden auf das Werkzeug oder die Werkzeuggruppe (3) ausgeübten Drucks (P) in eine entgegengesetzte Richtung zur Vorschubrichtung (A) ausführen kann, wobei diese Sicherheitsbewegung mindestens eine erste Bewegungsstufe umfasst, von der mindestens eine Komponente eine Drehung nach hinten ist, und dies in Bezug auf die Vorschubrichtung (A) und um das erste Gelenk (L1),
- wobei die Sicherheitsvorrichtung (5) ein Hubmittel (6) umfasst, das mit dem Kupplungsauflager (2) durch ein zweites Gelenk (L2) und mit dem Werkzeug oder der Werkzeuggruppe (3) oder mit dem Tragarm (4) durch ein drittes Gelenk (L3) verbunden ist,
Maschine (1), bei welcher das erste Gelenk (L1) den Tragarm (4) direkt mit dem Kupplungsauflager (2) verbindet,
bei welcher das zweite Gelenk (L2) in Bezug auf das erste Gelenk (L1) verhältnismäßig zur Vorschubrichtung (A) versetzt ist,
bei welcher das vierte Gelenk (L4) in Bezug auf das zweite Gelenk (L2) nach unten zum Boden (S) versetzt ist,
bei welcher das Hubmittel (6) so ausgelegt ist, dass es einerseits eine Änderung des Abstands (D) zwischen dem zweiten und dem dritten Gelenk (L2 und L3) über einen bestimmten Längenbereich zulässt und andererseits einen Anschlagzustand erreicht, in dem der Abstand (D) einen Maximal- oder Minimalwert aufweist und in dem das Hubmittel (6) eine nach oben gerichtete Kraft ausübt,
bei welcher jedes der ersten, zweiten und vierten Gelenke (L1, L2 und L4) einerseits zumindest eine begrenzte Drehung um eine Achse, die im Wesentlichen parallel zur Bodenebene (S) und im Wesentlichen parallel zur Vorschubrichtung (A) verläuft, und andererseits zumindest eine begrenzte Drehung um eine Achse, die im Wesentlichen senkrecht zur Bodenebene (S) verläuft, ermöglicht,
Maschine (1), **dadurch gekennzeichnet, dass** die Maschine (1) geeignet ist, dass die Sicherheitsbewegung eine zweite Bewegungsstufe umfassen kann, die an die erste Stufe anschließt und in der sich das Hubmittel (6) in dem vorgenannten Anschlagzustand befindet, in dem es auf das betreffende Werkzeug oder die betreffende Werkzeuggruppe (3), wenn der Druck (P) im Rahmen dieser zweiten Bewegungsstufe anhält, eine nach oben gerichtete Kraft ausübt, um das genannte Werkzeug oder die genannte Werkzeuggruppe (3) vom Boden (S) zu entfernen.

2. Maschine nach Anspruch 1, **dadurch gekennzeichnet, dass** die Übertragungsachse (AT) durch das erste Gelenk (L1) verläuft.

3. Maschine nach Anspruch 1 oder 2, **dadurch gekennzeichnet, dass** das erste Gelenk (L1) und das vierte Gelenk (L4) zusammen die Übertragungsachse (AT) definieren.

4. Maschine nach irgend einem der Ansprüche 1 bis 3, **dadurch gekennzeichnet, dass** sie mindestens einen ersten Zylinder (8) für das kontrollierte Halten des Werkzeugs oder der Werkzeuggruppe (3) in der normalen Arbeitsposition umfasst, wobei dieser erste Zylinder (8) die Ausführung der ersten Sicherheitsbewegungsstufe durch das Werkzeug oder die Werkzeuggruppe (3) ermöglicht.

5. Maschine nach irgend einem der Ansprüche 1 bis 4, **dadurch gekennzeichnet, dass** das zweite Gelenk (L2) in normaler Arbeitsposition in Bezug auf die Vorschubrichtung (A) nach vorne und in Bezug auf das Gelenk (L1) nach oben, entgegengesetzt zu dem Boden (S), versetzt ist, und dadurch, dass das Hubmittel (6) im Anschlagzustand ein Zugelement ist, das geeignet ist, eine Zugkraft zwischen dem Werkzeug oder der Werkzeuggruppe (3) einerseits und dem Kupplungsauflager (2) andererseits zu übertragen.

6. Maschine nach irgend einem der Ansprüche 1 bis 5, **dadurch gekennzeichnet, dass** die Sicherheitsvorrichtung (5) entweder den oder einen ersten Zylinder (8) oder ein Verbindungsmittel (6') vom Typ Kette oder Seil umfassen kann.

7. Maschine nach irgend einem der Ansprüche 1 bis 6, **dadurch gekennzeichnet, dass** sie eine Führungsvorrichtung (7) an dem oder an einem betreffenden Tragarm (4) umfasst, die so ausgelegt ist, dass sie eine Kraft an der Vorderseite (3') des Werkzeugs oder der Werkzeuggruppe (3) ausübt, um dieses oder diese durch eine Drehung um das erste Gelenk (L1) bereits in der ersten Sicherheitsbewegungsstufe nach oben zu kippen.

8. Maschine nach irgend einem der Ansprüche 1 bis 7, **dadurch gekennzeichnet, dass** sich das zweite Gelenk (L2) näher an einer Mittelebene (PM) des Kupplungsauflagers (2), senkrecht zur Bodenebene (S) und parallel zur Vorschubrichtung (A) befindet, als das erste Gelenk (L1) und dadurch, dass jedes der ersten, zweiten und vierten Gelenke (L1, L2 und L4) ein Kugelgelenk ist.

9. Maschine nach irgend einem der Ansprüche 1 bis 8, **dadurch gekennzeichnet, dass** sie, gegebenenfalls für jedes Werkzeug oder jede Werkzeuggruppe (3) einen Zylinder oder zweiten Zylinder (10) - den sogenannten Hubzylinder - umfasst, der dazu ausgelegt ist, durch Schwenken um die Übertragungsachse (AT), das Werkzeug oder die Werkzeuggruppe (3) wechselweise zwischen der Arbeitsposition und mindestens einer angehobenen Zwischen- oder Endposition zu bewegen, und dadurch, dass dieser Hubzylinder (10) baulich mit dem Hubmittel (6) verbunden ist und vorteilhafterweise fest mit dem oder einem ersten Zylinder (8) verbunden ist, der einen Teil des genannten Hubmittels (6) bildet, in der Verlängerung welchem er koaxial angebracht ist, und dazu ausgelegt ist, sich am Ende der ersten Sicherheitsbewegungsstufe in einem gestreckten Anschlagzustand zu befinden.

10. Maschine nach irgend einem der Ansprüche 1 bis 9, **dadurch gekennzeichnet, dass** sie zwei Werkzeuge oder Werkzeuggruppen (3) umfasst, die auf beiden Seiten des Kupplungsauflagers (2) angeordnet sind, vorzugsweise identische Formen aufweisen und in Bezug auf eine Mittelebene (PM) des Kupplungsauflagers (2) symmetrisch angeordnet sind, von denen jedes oder jede über einen spezifischen Tragarm (4) mit dem Kupplungsauflager (2) sowie mit einer Sicherheitsvorrichtung (5) verbunden ist.

11. Maschine nach irgend einem der Ansprüche 1 bis 10, **dadurch gekennzeichnet, dass** das Werkzeug oder die Werkzeuggruppe (3) aus einem Mähelement oder einem Behandlungselement für gemähte Pflanzen oder aus einer Gruppe solcher Elemente besteht, die über eine Drehgelenkverbindung (L5), die ein oder das fünfte Gelenk mit einer Achse, die im Wesentlichen parallel zur Vorschubrichtung (A) in normaler Arbeitsposition verläuft, bildet, am freien Ende (11) des Tragarms (4) gegenüber dem Kupplungsauflager (2) angekuppelt ist, wobei die Maschine (1) vom angebauten oder gezogenen Typ ist.

## Claims

1. An agricultural machine (1) moving normally in a direction of forward travel (A) during work, and comprising:
- a hitching support (2),
- at least one tool or group of tools (3) having, in a work position, an extension transverse to the direction of forward travel (A) and projecting laterally with respect to the hitching support (2),
- at least one mounting arm (4) connected on one hand to the hitching support (2) via a first articulation (L1) and a fourth articulation (L4) offset forward with respect to the first articulation (L1), in the direction of forward travel (A), and, on the other hand, to the tool or to the group of tools (3) considered, the said mounting arm (4) being mounted with the ability to pivot about an axis (AT) referred to as the transfer axis, substantially parallel to the plane of the ground (S) when the machine (1) is hitched, and about which the tool or the group of tools (3) can be transferred alternately between the work position in which it at least partially rests on the ground (S) and at least one raised position, in which it is distanced from the ground (S),
- a safety device (5) by means of which the tool or the group of tools (3) considered can perform a safety movement under the effect of sufficient pressure (P) exerted on the said tool or group of tools (3) in an opposite direction to the direction of forward travel (A), this safety movement comprising at least a first phase of movement of which at least one component is a rotation toward the rear, this being with respect to the direction of forward travel (A), and about the first articulation (L 1),
- the safety device (5) comprising one lifting means (6) connected to the hitching support (2) by a second articulation (L2) and to the tool or to the group of tools (3), or to the mounting arm (4), by a third articulation (L3),
machine (1)
in which the first articulation (L1) directly connects the mounting arm (4) to the hitching support (2),
in which the second articulation (L2) is offset relative to the direction of forward travel (A) with respect to the first articulation (L 1), and
in which the fourth articulation (L4) is offset downward toward the ground (S) with respect to the second articulation (L2),
in which the lifting means (6) is configured to, on one hand, allow a variation in the distance (D) between the second and third articulations (L2 and L3) over a determined range of lengths and, on the other hand, reach an end-stop state in which the said distance (D) exhibits a maximum or minimum value, and in which the said lifting means (6) exerts an upwardly directed force, and
in which each of the first, second and fourth articulations (L 1, L2 and L4) allows, on one hand, at least a limited rotation about an axis substantially parallel to the plane of the ground (S) and substantially parallel to the direction of forward travel (A) and, on the other hand, at least a limited rotation about an axis substantially perpendicular to the plane of the ground (S),
machine (1) **characterized in that** the machine (1) is suited so that the safety movement may comprise a second phase of movement that is consecutive to the first phase in which the lifting means (6) is in an end-stop state in which, if the pressure (P) persists in the context of this second phase of movement, it exerts on the tool or the group of tools (3) considered an upwardly-directed force so as to distance the said tool or group of tools (3) considered from the ground (S).

2. Machine according to claim 1, **characterized in that** the transfer axis (AT) passes through the first articulation (L1).

3. Machine according to claim 1 or 2, **characterized in that** the first articulation (L 1) and the fourth articulation (L4) together define the transfer axis (AT).

4. Machine according to any one of claims 1 to 3, **characterized in that** it comprises at least a first cylinder (8) for keeping the tool or the group of tools (3) in its normal work position in a controlled manner, this first cylinder (8) allowing the tool or the group of tools (3) to perform the first phase of the safety movement.

5. Machine according to any one of claims 1 to 4, **characterized in that** the second articulation (L2) is, in the normal work position, offset forward, relative to the direction of forward travel (A), and upward, away from the ground (S), with respect to the first articulation (L 1), and **in that** the lifting means (6) in the end-stop state is a tie able to transmit a pulling force between the tool or group of tools (3) on one hand, and the hitching support (2) on the other hand.

6. Machine according to any one of claims 1 to 5, **characterized in that** the safety device (5) may comprise either the or a first cylinder (8), or a connecting means (6') of the chain or cable type.

7. Machine according to any one of claims 1 to 6, **characterized in that** it comprises a guide device (7) at the or a mounting arm (4) considered which is configured to exert a force on the front (3') of the tool or the group of tools (3) so as to tilt it upward by rotation about the first articulation (L1), this already being during the first phase of the safety movement.

8. Machine according to any one of claims 1 to 7, **characterized in that** the second articulation (L2) is situated closer to a midplane (PM) of the hitching support (2), perpendicular to the plane of the ground (S) and parallel to the direction of forward travel (A), than the first articulation (L1), and **in that** each of the first, second and fourth articulations (L1, L2 and L4) is a ball-jointed articulation.

9. Machine according to any one of claims 1 to 8, **characterized in that** it comprises, where appropriate for each tool or group of tools (3), a cylinder or second cylinder (10) referred to as the raising cylinder, configured to transfer the tool or the group of tools (3) considered alternately between the work position and at least one intermediate or final raised position, by pivoting about the transfer axis (AT), and **in that** this raising cylinder (10) is structurally associated with the lifting means (6) and is advantageously secured to and arranged coaxially in the extension of the or a first cylinder (8) that forms part of the said lifting means (6) and configured to be in a lengthened end-stop state at the end of the first phase of the safety movement.

10. Machine according to any one of claims 1 to 9, **characterized in that** it comprises two tools or groups of tools (3) arranged on either side of the hitching support (2), preferably of identical form and arranged symmetrically with respect to a midplane (PM) of the said hitching support (2), each connected to the hitching support (2) by a specific mounting arm (4) and each associated with a safety device (5).

11. Machine according to any one of claims 1 to 10, **characterized in that** the tool or the group of tools (3) consists of a mowing member or a member for treating cut plant matter, or a group of such members, attached by means of a pivot connection (L5) that forms a or the fifth articulation with an axis substantially parallel to the direction of forward travel (A) in the normal work position, at the free end (11) of the support arm (4) that is the opposite end to the hitching support (2), the said machine (1) being of the mounted or drawn type.
